# EUROPEAN PATENT APPLICATION

(11) **EP 0 672 517 A1**
(43) Date of publication of application: **20.09.1995**
(21) Application number: 95200592.4
(22) Date of filing: 10.03.1995
(51) Int. Cl.: B29C 70/22, B29C 70/30

(54) **Process for manufacturing composite materials having a low thermal expansion coefficient and composite materials thus obtained**

(30) Priority: 14.03.1994 IT MI940465
(71) Applicant: SINCROTRONE TRIESTE Societa Consortile per Azioni, I-34012 Trieste (IT)
(72) Inventor: Soma', Aurelio, I-12038 Savigliano (Cuneo) (IT); De Bona, Francesco, I-33100 Udine (IT); Gambitta, Alessandro, I-34170 Gorizia (IT)
(74) Representative: Marchi, Massimo

(57) **Abstract**

Manufacture of a multilayer laminate from a sheet or tape comprising a preselected quantity of fiber and polymer through the following steps:
a) a suitable sample is prepared,
b) the necessary experimental values are determined on said sample,
c) a laminate is manufactured which is formed by at least two sheets oriented according to preselected angles and by at least a sheet oriented according to a third angle determined by introducing the abovementioned experimental values in the expressions belonging to the theory of lamination.

## Description

The present invention relates both to a process for manufacturing composite materials having a low thermal expansion coefficient in a preferential direction and composite materials thus obtained.

More in particular the present invention relates to Laminates comprising threads buried in a polymer matrix.

In addition to the usual applications in the aerospace and optical instrumentation fields, the availability of composite materials having a low thermal expansion coefficient in a preferential direction allows innovative applications in other sectors of mechanical engineering.

For example, in the field of measurement robots, the construction of some of the parts of the machine with a composite material having good mechanical characteristics and a low thermal expansion could avoid the use of thermostated chambers, inserting the measurement instruments directly into the manufacturing line, with a substantial reduction in costs (Stumm J. et al.: Graphite/Epoxy Material Characteristics and Design Techniques for Airborne Instrument Application; Spie Proc. 309, 1981, pages 188-198).

The theory of lamination offers the calculation means for the determination of the theoretical orientation according to which the various sheets (or laminae) of a laminate should be arranged in order to reduce the thermal expansion coefficient in a prefential direction to a minimum.

Examples of such calculation means are Schapery's expression (R.E. Schapery: Thermal expansion coefficients of composite materials based on energy principles; J. Composite Materials, 2, 1978, pages 380-404) and Halpin-Pagano's (Halpin J.C., Pagano N.J. : Consequences of environmentally induced dilatation in solids; AFML-TR-68-395, 1969). For an exhaustive explanation of the lamination theory reference is also made to R.M. Jones "Mechanics of Composites Materials" McGraw Hill, 1975.

More in particular, Schapery's expression is suitable for determining behaviour due to thermal expansion in the main directions of a single sheet and the values thus obtained can then be used to obtain the expansion behaviour of a generic multilayer laminate with the abovementioned theory of lamination.

However, in order to make this calculation it is also necessary to know some properties of the fiber and of the polymer matrix that can only be measured experimentally.

The main experimental values that have to be known are: Young's modulus, Poisson's coefficient, and the thermal expansion coefficient.

Young's modulus and Poisson's ratio are determined according to ASTM D3379-75 "Single Fiber Testing".

For the fiber and the resin, these two elastic parameters are usually certified by the vendor and their margin of uncertainty is very low. Their utilization in the theory of lamination thus leads to fairly accurate results and, in any case, the margin of uncertainty is sufficient not to have a significant influence on the thermal expansion coefficient.

On the contrary, the methods proposed so far for measuring the thermal expansion of the single fiber are still unsatisfactory (C.L. Tsai, I.M. Daniel; "Method for Thermo-Mechanical Characterization of Single Fibers", Composites Science and Technology, vol. 50, pages 7-12, 1994).

Thus the manufacture of laminates with a very low thermal expansion coefficient in a preferential direction still involves some steps which are mainly empirical in nature and does not lead to controlled and repeatable results. This results in very expensive manufactureing processes (Krim M.H. "Design of highly stable optical support structure", Optical Engineering, 16(6), pages 552-558) and/or very high production rejects (McCarthy D.J., Facey T.A.: Design and fabrication of the NASA 2.4-meter space telescope; SPIE Vol. 330, Optical Systems Engineering II, 1982, 139-143).

In addition to the difficulties inherent in the determination of the fiber's thermal expansion coefficient, this is also due to the so-called technological errors. The expression "technological errors" includes all those causes that currently cannot be eliminated or that can only be eliminated at a very high cost, that contribute in causing the deviation of the actual thermal expansion coefficient measured in a preferential direction of a laminate with respect to the calculated value. Examples of such causes are: formation of small vacuum pockets inside the polymer matrix, imperfect distribution or alignment of the fibers in the polymer matrix, deterioration of the fiber's mechanical properties due to the material forming the polymer matrix, variation in physical characteristics encountered from a batch to another even when the same raw materials are used and the conditions of the method of hardening of the polymer matrix are not changed and such like.

It has now been found that these difficulties can be overcome by first producing, according to known techniques, sheets or tapes comprising a preselected quantity of fiber and of prepolymer, then preparing a sample of multilayer laminate having the same number of sheets as the laminate to be manufactured except that in said sample the sheets are arranged so that the fibers are oriented in the same direction, determining Young's modulus, Poisson's coefficient and the thermal expansion coefficient of said sample both in a direction parallel and in a direction orthogonal to the fibers (0° and 90°) and then manufacturing a laminate formed by at least two sheets oriented according to two preselected angles and by at least one sheet oriented according to a third angle determined by introducing into the expressions belonging to the theory of lamination Young's modulus, Poisson's coefficient and the thermal expansion coefficient determined on said sample both in a direction parallel and in a direction orthogonal to the fibers (0° and 90°).

Therefore, it is a first object of the present invention to provide a process for manufacturing a multilayer laminate from a sheet or a tape comprising a preselected quantity of fiber and of polymer, characterized in that:
a) a sample is prepared having the same number of sheets as the laminate to be manufactured except that in said sample the sheets are arranged so that the fibers are oriented in the same direction,
b) Young's modulus, Poisson's coefficient and the thermal expansion coefficient of said sample are determined both in a direction parallel and in a direction orthogonal to the fibers (0° and 90°), and
c) a laminate is manufactured which is formed by at least two sheets oriented according to two preselected angles and by at least one sheet oriented according to a third angle determined by introducing into the expressions of the theory of lamination Young's modulus, Poisson's coefficient and the thermal expansion coefficient determined on said sample both in a direction parallel and in a direction orthogonal to the fibers (0° and 90°).

The thermal expansion coefficient in a preferential direction of the laminates thus manufactured is lower by about 10 times than that of laminates manufactured, other materials being equal, according to conventional processes.

In addition, with the process of the present invention, the abovementioned result can be obtained in a controlled and repeatable manner.

It is, therefore, a further object of the present invention to provide a laminate having a very low thermal expansion coefficient in a preferential direction, characterized in that it has been manufactured with the abovementioned process.

A typical example of a lamination theory suitable for predetermining said third angle is that of Halpin and Pagano, already mentioned above.

The best performances of laminates according to the present invention are essentially due to the fact that the process of the invention allows the third angle to be determined with great accuracy thanks to the fact that
- as opposed to what takes place with the fiber, the thermal expansion coefficient of the sample can be accurately measured with an interferometric method already described by the inventors themselves (F. De Bona, A. Gambitta, A. Somà: Evaluation of Thermal Expansion Coefficient Versus Fiber Orientation of Composite Laminate; Proc. of Experimental Techniques and Design in Composite materials, Cagliari, 1992, pages 247-258);
- the measurement of Young's modulus, of Poisson's coefficient and of the thermal expansion coefficient directly on the sample, instead of on the fiber and on the polymer matrix, obviate to the major part of "technological errors".

Of course, steps a), b) and the determination of the third angle can be omitted when operational conditions have been standardized and raw materials are used, in times reasonably close to one another, from the same batch.

Since, as said above, the margin of uncertainty of the elastic moduli (Young's modulus and Poisson's coefficient) is fairly low, in an embodiment of the process of the present invention use is made of the values determined on the fiber and on the polymer matrix instead of those determined on the sample.

For the purpose of determining Young's modulus, Poisson's coefficient and the thermal expansion coefficient, the sample is preferably square.

In contrast, when for reasons linked with the measuring instruments it is necessary to use rectangular samples it is preferable to manufacture two samples: one wherein the longer side of the rectangle is orthogonal to the fibers and another wherein the above side is parallel to the fibers.

In order to calculate the third angle with extreme accuracy, it is preferred to use homogeneous series of measurement samples, to determine the average values of the required measurements and then to use said average values in the above calculation of the third angle. Typically, a homogeneous series comprisese ten samples of the same type.

The polymer matrix is preferably formed by a heat-hardening resin or by a mixture of heat-hardening resins.

Examples of preferred heat-hardening resins are the epoxy resins and the modified epoxy resins.

Typical examples of preferred resins are Araldit™ LY 565 with the hardener HY 2954, Araldit™ SV 1132IT with the hardener HY 2954 and EPIKURE™ DX 6502 with the hardener Epikote™ DX 6002. The first two systems are available from Ciba-Geigy while the third is available from Shell.

Preferably, the fibers are of HM (high module) or LM (low module) carbon, of CSi, of glass or aramidics such as Kevlar™.

Preferably, the concentration of fibers in the composite material ranges from 45% to 75% by volume; even more preferably it ranges from 50% to 70%. Typically it is of 60%.

Generally the thickness of the sheets ranges from 0.05 mm to 0.25 mm, typically from 0.1 mm to 0.15 mm, while that of the multilayer laminate ranges from 0.2 mm to 10 mm. Preferably the thickness of the multilayer laminate ranges from 0.25 mm to 6 mm; typically it is of from 1 mm to 4 mm.

The structure of the laminates according to the present invention is, preferably, symmetrical and balanced.

This type of structure can be represented, in the case of a laminate formed by twelve sheets, by the following sequence:
where / is the plane of the laminate's center line, A, B and C are sheets arranged according to angles of orientation that are different one from the other.

From the sequence shown above it is self-evident that the term "symmetrical" intends to mean that the succession of the orientations of the upper sheets is exactly the same as that of the lower sheets except that the signs of the angles are opposite. For example, if the third upper sheet (-B) has an orientation of -45°, the third lower sheet (B) will have an orientation of 45°.

The term "balanced", on the other hand, intends to mean that each sheet is balanced by an adjacent sheet having the same angle of orientation but of opposite sign. Going back to the previous example, wherein it was assumed that the angle of the sheets B was equal to 45°, it can in fact be seen that the third upper sheet (-B = -45°) is compensated by a fourth upper sheet (B = 45°) while the third lower sheet (B = 45°) is compensated by a fourth lower sheet (-B = -45°).

A particular embodiment of the present invention refers to a balanced symmetrical laminate having twelve layers, each layer being formed by about 60% (v/v) of unidirectional threads of HM carbon in an epoxy matrix (about 40%, v/v) and having a thickness of 0.15 mm, wherein the abovementioned layers are arranged in the following sequence:
where C is 0°, A is 30° and B is 60° ± 5°.

The laminates of the present invention can be manufactured according to conventional techniques. Examples of conventional techniques are the so-called methods of manual- or machine-deposition. In turn the method of manual-deposition comprises means of wet manual-deposition and that of manual-deposition of preimpregnated fibers.

The method preferred according to the present invention is that of the manual deposition of preimpregnated fibers (prepreg method).

This method consists in preimpregnating the fiber with a heat-hardening resin, in arranging the preimpregnated fiber in unidirectional tapes, in causing a partial hardening of the resin and in smoothing the unidirectional tape with a roller.

Said unidirectional tapes are particularly suitable for the present invention.

A particularly preferred embodiment of the present invention thus provides for the sheets of laminate be made of tapes of preimpregnated unidirectional fibers.

The width of the commercial tapes is of from 8 to 200 cm but, generally, it is of from 30 to 60 cm.

Usually, the fiber content in the preimpregnated tapes is expressed as a percentage by weight while, as has been mentioned above, it is expressed in the finished composite as a percentage by volume. The reason for this is in the fact that the percentage by weight of the resin can be determined easily in the preimpregnated product while in the finished composite it is easier to determine its percentage by volume.

Example of suitable, commercial preimpregnated tapes are Texipreg™ FC12C HM120 REC by Seal S.p.A. of Legnano (Mi) and Cycom™ 950-1-32% M55J-140-300 by Cyanamid UK.

The manufacture of a laminate starting from unidirectional tapes of preimpregnated fibers is performed with the vacuum bag technique and the resin is then hardened in an autoclave.

For a more detailed description of the techniques for the manufacture of laminates explicit reference is made to the "International Encyclopedia of Composites" (ed. Stuart M. Lee, VCH Publishers, N.Y. 1991, vol. 3, pages 102-142).

The following examples illustrate the present invention without, however, limiting it in any way.

### EXAMPLE 1

Texipreg™ FC12C HM120 REC, unidirectional preimpregnated tape by Seal S.p.A. has been used.

With this material 20 samples were prepared (60 x 160 x 1.5 mm), each formed by 12 sheets, prepared for manual stratification according to the vacuum bag technique. In ten of these samples the fibers were parallel to the 160 mm side; in the other ten the fibers were instead orthogonal to the 160 mm side. The samples of the first type will be referrred to hereinafter as (0₁₂) while those of the second type will be referred to as (90₁₂).

The dimensions of the samples were selected so as to minimize the effects of the edge and of the lack of homogeneousness (S. Tompkins S. et al.: Laser Interferometric Dilatometer for Thermal Expansion Measurements of Composites; Experimental Mechanics, March 1986, pages 1-6).

All the samples were treated simultaneously in an autoclave by heating them (2°C/min) up to 132°C at a pressure of about 6 bar. When this temperature was reached, temperature and pressure were maintained for two hours at 132°C and 6 bar, respectively. The samples were then allowed to cool in autoclave (3°C/min, 6 bar) down to 60°C. After that the autoclave was restored to atmospheric pressure.

But during the compacting step the pressure was about 0.5 bar.

After drying according to the procedure suggested by D.E. Bowels, D. Post et al. (Moiré Interferometry for Thermal Expansion of Composites; Experimental Mechanics, December 1981, pages 441-447) each sample was subjected to 10 repeated measurements of the thermal expansion coefficient.

The latter was measured in the temperature range 20°C-30°C with the already mentioned interferometer technique of De Bona et al. that is based on a doppler laser system with two frequencies and differential-type optics wherein sensitivity is increased by using a Michelson configuration except that the method was suitably modified with the aim of increasing its accuracy. In particular the modification consists in a sample support system that uses a linear guide with parallel laminae so a to minimize any error induced by the angular variations of the measurement optics during the course of the test. In this way it ha been possible to obtain a measurement of the thermal expansion with a resolution of 30 nm/m and an interval of uncertainty of 100 nm/m.

Since the thermal exchange characteristics of the laminate are highly anisotropic the calculation of the thermal expansion coefficient was made by assessing the difference in length of the sample in relation to the temperature between two stationary states; in fact, during the heating and cooling transitories, significant thermal gradients had built up and thus the measurement of the slope of the thermal expansion curve would introduce significant errors.

The average values of the expansion coefficient measured in this way were as follows:

| Sample | Average value of the thermal expansion coefficient (αₛ) (µm/mK) | Standard deviation (δₛ) (µm/mK) |
|---|---|---|
| (0₁₂) | -0.28 | 0.03 |
| (90₁₂) | 43.83 | 0.66 |

After measuring the above average values of the thermal expansion coefficient the value of B was determined in a laminate formed by twelve sheets arranged in the following sequence:
when C is 0° and A is 30°.

The two angles C and A were preset at 0° and 30°, respectively, because these ensure a minimum effect of the technlogical error made during the deposition of the sheets.

For the calculation of the third angle (B) the following further experimental values have been used

| | |
|---|---|
| Young's modulus of the fiber : | 340 Gpa |
| Young's modulus of the matrix : | 3.4 Gpa |
| torsional module of the matrix : | 1.5 Gpa |
| percentage of fiber (v/v) : | 60 |
| Poisson's coefficient of the matrix : | 0.35 |
| Poisson's coefficient of the fiber : | 0.2 |
| thickness of the individual layers : | 0.15 mm |

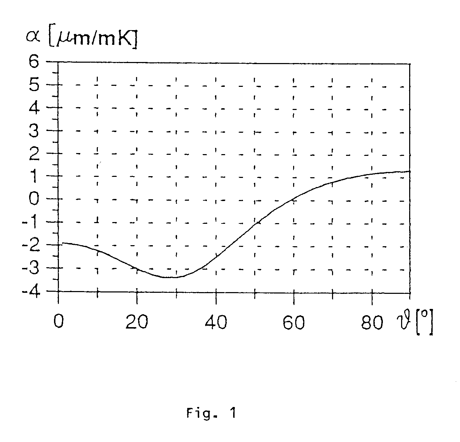

With an iterative procedure based on the theory of lamination there was obtained the diagramme of
Fig. 1 wherein, the x-axis shows the angle of orientation of the fibers while the y-axis shows the thermal expansion coefficient of the balanced symmetrical laminate with 12 sheets to be manufactured.

As can easily be seen, Fig. 1 shows that the thermal expansion coefficient of the laminate under examination is zero when angle B is of 60°.

Using the same batch of material, the following type of laminate has then been manufactured
(30°)(-30°)(60°)(-60°)(0°)(-0°)/(-0°)(0°)(-60°)(60°)(-30°)(30°)

The thermal expansion coefficient of this laminate has been measured with the interferometric procedure described above and the following results have been obtained:

| Average value of the thermal expansion coefficient (αₛ) (µm/mK) | Standard deviation (δₛ) (µm/mK) |
|---|---|
| -0.10 | 0.04 |

It can be seen that the laminate has a very low average value of the thermal expansion coefficient and that the value of the standard deviation is also very limited.

## Claims

1. A process for manufacturing a multilayer laminate from a sheet or a tape comprising a preselected quantity of fiber and of polymer, characterized in that:
a) a sample is prepared having the same number of sheets as the laminate to be manufactured except that in said sample the sheets are arranged so that the fibers are oriented in the same direction,
b) Young's modulus, Poisson's coefficient and the thermal expansion coefficient of said sample are determined both in a direction parallel and in a direction orthogonal to the fibers (0° and 90°), and
c) a laminate is manufactured which is formed by at least two sheets oriented according to two preselected angles and by at least one sheet oriented according to a third angle determined by introducing into the expressions of the theory of lamination Young's modulus, Poisson's coefficient and the thermal expansion coefficient determined on said sample both in a direction parallel and in a direction orthogonal to the fibers (0° and 90°).

2. A process according to claim 1, characterized in that the third angle is determined according to the lamination theory of Halpin and Pagano.

3. A process according to claims 1 or 2, characterized in that the thermal expansion coefficient of said sample is measured with an interferometric method.

4. A process according to any of the claims from 1 to 3, characterized in that in the determination of the third angle use is made of Young's modulus and of Poisson's coefficient measured on the fiber and on the polymer matrix instead of those determined on the sample.

5. A process according to any of the claims from 1 to 4, characterized in that steps a), b) and the determination of the third angle are omitted when the same raw materials are used and operational conditions have been standardized.

6. A process according to any of the claims from 1 to 5, characterized in that the prepared sample has a square shape.

7. A process according to any of the claims from 1 to 5, characterized in that, when the sample prepared in step a) has a rectangular shape, two of them are manufactured: one wherein the longer side of the rectangle is orthogonal to the fibers and another wherein the above side is parallel to the fibers.

8. A process according to any of the claims from 1 to 7, characterized in that in step a) homogeneous series of samples are prepared to determine average values of the measurements required for the calculation of the third angle.

9. A process according to claim 8, characterized in that each homogeneous series is formed by ten samples of the same type.

10. A process according to any of the claims from 1 to 9, characterized in that the polymer is a heat-hardening resin or by a mixture of heat-hardening resins.

11. A process according to claim 10, characterized in that the heat-hardening resin is an epoxy resins or a modified epoxy resins.

12. A process according to any of the claims from 1 to 11, characterized in that the fiber is selected from a group comprising HM carbon fibers, LM carbon fibers, CSi fibers, glass fibers and aramidic fibers.

13. A process according to any of the claims from 1 to 12, characterized in that the concentration of fibers in the multilayer laminate is of from 45% to 75% by volume.

14. A process according to claim 13, characterized in that the concentration of fibers in the multilayer laminate is of from 50% to 70%.

15. A process according to claim 14, characterized in that the concentration of fibers in the multilayer laminate is of 60%.

16. A process according to any of the claims from 1 to 15, characterized in that the thickness of the sheets is of from 0.05 mm to 0.25 mm.

17. A process according to claim 16, characterized in that the thickness of the sheets is of from 0.1 mm to 0.15 mm.

18. A process according to any of the claims from 1 to 17, characterized in that the thickness of the multilayer laminate is of from 0.2 mm to 10 mm.

19. A process according to claim 18, characterized in that the thickness of the multilayer laminate is of from 0.25 mm to 6 mm.

20. A process according to claim 19, characterized in that the thickness of the multilayer laminate is of from 1 mm to 4 mm.

21. A process according to any of the claims from 1 to 20, characterized in that the structure of the multilayer laminate is symmetrical.

22. A process according to claim 21, characterized in that the structure of the multilayer laminate is balanced.

23. A process according to any of the claims from 1 to 22, characterized in that the multilayer laminate is manufactured with the method of the manual deposition of preimpregnated fibers.

24. A process according to claim 23, characterized in that use is made of tapes of preimpregnated unidirectional fibers.

25. A process according to claim 24, characterized in that the tape of preimpregnated unidirectional fibers is Texipreg™ FC12C HM120 REC.

26. A multilayer laminate having a very low thermal expansion coefficient in a preferential direction, characterized in that it has been manufactured with the process of one or more of the previous claims from 1 to 25.

27. A balanced symmetrical laminate having twelve layers, each layer being formed by about 60% (v/v) of unidirectional threads of HM carbon in an epoxy matrix (about 40% v/v) and having a thickness of 0.15 mm, wherein the abovementioned layers have been arranged in the following sequence: where C is 0°, A is 30° and B is 60° ± 5°.
